# EUROPÄISCHE PATENTSCHRIFT

(11) **EP 2 321 132 B1**
(45) Veröffentlichungstag und Bekanntmachung des Hinweises auf die Patenterteilung: **14.03.2012**
(21) Anmeldenummer: 09777720.5
(22) Anmeldetag: 07.08.2009
(51) Int. Cl.: B60C 27/18

(54) **GLEITSCHUTZVORRICHTUNG MIT ERHÖHTER STANDZEIT**
ANTI-SKID DEVICE HAVING INCREASED SERVICE LIFE
DISPOSITIF ANTIDÉRAPANT À DÉLAI D'IMMOBILISATION AMÉLIORÉ

(30) Priorität: 12.09.2008 DE 102008047071
(43) Veröffentlichungstag der Anmeldung: 18.05.2011
(73) Patentinhaber: RUD Ketten Rieger & Dietz GmbH u. Co. KG, 73432 Aalen (DE)
(72) Erfinder: RIEGER, Hansjörg, 73431 Aalen (DE); KAISER, Helmut, 73457 Essingen (DE)
(74) Vertreter: Rüger, Barthelt & Abel
(86) Internationale Anmeldenummer: PCT/EP2009/005724
(87) Internationale Veröffentlichungsnummer: WO 2010/028724

(56) Entgegenhaltungen:
- EP-A- 1 745 948
- DE-U1-202007 018 304

## Beschreibung

Aus der nicht vorveröffentlichten Patentanmeldung DE 10 2008 013 230 ist eine Gleitschutzvorrichtung für Kraftfahrzeuge bekannt. Diese Gleitschutzvorrichtung liefert eine verbesserte Traktion auf Eis.

Aus der DE 20 1007 01834 U1 ist eine Gleitschutzvorrichtung für Kraftfahrzeugräder bekannt, die eine Radinnenseite eine Radaußenseite und eine Lauffläche aufweisen. Die Gleitschutzvorrichtung weist ein erstes Fixiermittel auf, das bei montierter Gleitschutzvorrichtung an der Radinnenseite angeordnet ist. Es ist ein zweites Fixiermittel vorgesehen, das bei montierter Gleitschutzvorrichtung an der Radaußenseite angeordnet ist und einen Laufgürtel aufweist, der bei montierter Gleitschutzvorrichtung auf der Lauffläche liegt. Der Laufgürtel bildet eine Kontaktfläche zur Straße und weist zwei seitliche Längskanten auf, von denen die eine mit dem ersten Fixiermittel und die andere Kante mit dem zweiten Fixiermittel verbunden ist. Der der Laufgürtel weist ein Gewebe aus sich kreuzenden Fäden auf wobei einige der Fäden aus Umwindegarn bestehen.

Die bekannte Gleitschutzvorrichtung weist einen Laufgürtel auf, der auf der Lauffläche des Reifens liegt. Um den Laufgürtel in seitlicher Richtung zu führen sind zwei Fixierringe vorgesehen, die mit den Längskanten des Laufgürtels verbunden sind. Diese Fixierringe übernehmen keine Radialkräfte. Die bei der Rotation des Rades auftretenden Fliehkräfte im Laufgürtel werden ausschließlich im Laufgürtel selbst aufgenommen.

Um die Traktion zu erhöhen, ist vorgesehen, dass die Fäden, die auf dem Laufgürtel quer zur Längserstreckung des Laufgürtels liegen und damit parallel zu der Drehachse des Rades zum Teil aus Umwindegarn bestehen. In Längsrichtung des Laufgürtels gesehen, wechseln sich somit einfache Fäden, die eine glatte Oberfläche aufweisen, mit Fäden ab, die aus Umwindegarn bestehen. Das Umwindegarn setzt sich aus einer polymeren Seele und einem sich darum schraubenförmig windenden Umwindefaden zusammen. Der Umwindefaden besteht aus Edelstahldraht. Dadurch werden auf der Außenseite des Laufgürtels punktförmige Kontaktstellen durch den Umwindefaden hergestellt. Diese Kontaktpunkte sind erhöht und dringen in das Eis ein. Es entsteht ein Formschluss, der für eine erhöhte Traktion sorgt.

Um das Eindringen der Umwindefäden zu erreichen, darf die Anzahl der Umwindefäden pro Flächenelement, abhängig vom Fahrzeuggewicht, eine bestimmt Anzahl nicht überschreiten.

Die Anbindung jener Fäden, die als Umwindegarn ausgeführt sind, an das übrige Gewebe ist ein kritischer Punkt, denn wenn die anbindenden Fäden durchgescheuert sind, lösen sich die die Traktion liefernden Fäden aus Umwindegarn, womit die Traktionseigenschaften auf Eis verloren gehen.

Ausgehend hiervon ist es Aufgabe der Erfindung eine Gleitschutzvorrichtung zu schaffen, die sich durch eine erhöhte Standzeit auszeichnet.

Diese Aufgabe wird erfindungsgemäß durch eine Gleitschutzvorrichtung mit den Merkmalen des Anspruchs 1 gelöst.

Die neue Gleitschutzvorrichtung ist für Fahrzeugräder vorgesehen, die eine Radinnenseite und eine Radaußenseite aufweisen. Zu der Gleitschutzvorrichtung gehört ein Laufgürtel, der auf der Lauffläche des Reifens aufliegt. Der Laufgürtel wir von zwei seitlichen, etwa parallel zueinander verlaufenden Kanten begrenzt. Mit jeder Seitenkante ist ein Fixiermittel verbunden. Das eine Fixiermittel befindet sich bei montierter Gleitschutzvorrichtung auf der Radinnenseite und das andere auf der Radaußenseite. Die Fixiermittel haben den Zweck, den Laufgürtel auf der Lauffläche des Reifens zu halten. Es soll durch die Fixiermittel verhindert werden, dass der Laufgürtel seitlich von der Lauffläche herunterwandert.

Im Übrigen müssen die Fixiermittel nur die in ihnen auftretenden Fliehkräfte aushalten.

Der Laufgürtel selbst besteht aus einem Gewebe, bei dem Fäden, die quer zur Längserstreckung des Laufgürtels liegen, von Umwindegarn gebildet sind. Diese Fäden aus Umwindegarn sind an das übrige Gewebe durch Fäden angebunden, die in Längsrichtung des Laufgürtels und damit in Umfangsrichtung des Reifens liegen.

Um die Verschleißfestigkeit zu erhöhen, sind auf dem Laufgürtel wenigstens zwei vorzugsweise drei in Längsrichtung des Laufgürtels liegende Streifen vorhanden, in denen die Anbindung der Fäden aus Umwindegarn stärker ist als in den Bereichen außerhalb dieser Streifen.

Durch die verstärkte Anbindung wird die Verschleißfestigkeit erhöht, da sehr viele in Längsrichtung verlaufende Fäden die Fäden aus Umwindegarn halten. Andererseits wird die Traktionsfähigkeit nicht nennenswert eingeschränkt, denn in den Bereichen zwischen den Streifen mit verstärkter Anbindung ergeben sich sehr gute Traktionsverhältnisse, denn die Traktionseigenschaften werden im Wesentlichen durch die Umwindefäden des Umwindegarns festgelegt. In den Bereichen mit erhöhter Anbindung kommen diese Fäden nicht besonders gut zum Einsatz, weil die anbindenden Garne teilweise die umwindenden Fäden der Umwindegarne überdecken, womit die Wirkung der umwindenden Fäden verloren geht. In den Bereichen zwischen diesen Streifen dagegen, können die Umwindefäden ungestört mit der Eisoberfläche in Eingriff kommen.

Zweckmäßigerweise kann die Gleitschutzvorrichtung Fäden aus Umwindegarn enthalten, wobei diese Fäden parallel zu der Achse des Rades liegen.

Das Umwindegarn kann sich aus einer Seele oder einem Kern und einem Umwindefaden zusammensetzen, der vorzugsweise aus Edelstahl besteht.

Der Kern oder die Seele des Umwindegarns hat einen Durchmesser zwischen 0,2 mm und 1,0 mm.

Der Abstand zwischen zwei benachbarten Windungen bzw. die Steigung bei einem einzigen Umwindefaden liegt zwischen 0,3 mm und 4 mm.

Um die Anzahl der Kontaktstellen zwischen Umwindefaden und Eisoberfläche zu optimieren kann der Abstand zwischen zwei benachbarten Fäden aus Umwindegarn, gemessen in Umfangsrichtung des Laufgürtels, zwischen 0,3 mm und 10 mm liegen. Diese Zwischenräume können von Fäden gefüllt sein, die nicht als Umwindegarn ausgeführt sind.

Die in Umfangsrichtung verlaufenden Fäden können einen Durchmesser zwischen 0,1 mm und 1 mm aufweisen.

Die Breite eines Streifens, in der die quer verlaufenden Fäden stärker eingebunden sind, kann zwischen 3 mm und 40 mm.

Die Verteilung der Streifen auf dem Laufgürtel kann derart gewählt sein, dass bei auf der Fahrbahn aufstehendem Rad beidseits der außen liegenden Streifen mit stärkerer Anbindung Bereiche verbleiben, in denen die quer verlaufenden Fäden weniger stark angebunden sind.

In den Streifen, in denen die quer verlaufenden Fäden stärker angebunden sind, kann die Anzahl der anbindenden, in Längsrichtung des Laufgürtels verlaufenden Fäden zwischen 0,3 und 3 pro Millimeter Längserstreckung des quer verlaufenden Fadens liegen.

Die anbindenden Fäden können synthetische Multifilamentfäden sein, beispielsweise aus Polyester, Polyamid oder Kevlar.

Zweckmäßigerweise können der Laufgürtel und die Fixierringe biegeschlaff sein, was die Verstaubarkeit wesentlich vereinfacht.

Ein guter Sitz der Gleitschutzvorrichtung auf dem Rad wird erreicht, wenn der Laufgürtel einen Flächenhaftverschluss aufweist, an dem sich die Enden des Laufgürtels überlappen.

Eine besonders gute Standzeit wird erreicht, wenn der Laufgürtel von einem Doppelgewebe gebildet ist. In einem Doppelgewebe reichen entsprechend der Bindungsart die Kettfäden der einen Lage um die Schussfäden der anderen Lage herum. Auf diese Weise sind die beiden Lagen über die über die jeweils andere Lage gezogenen Kettfäden fest miteinander verbunden. Wenn bei einem solchen Gewebe die äußere Lage, die in Kontakt mit der Fahrbahn steht, durchgescheuert ist, so dass dort Löcher entstehen, werden durch die unbeschädigte darunter liegende Lage die Lochränder fixiert. Das weitere Auflösen des Laufgürtels wird somit deutlich verlangsamt, weil sich die in der äußeren Lage gebildeten Löcher nicht ohne Weiteres ausbreiten können.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung der wesentlichen Details kann es sein, dass bestimmte Bereiche übertrieben groß dargestellt sind. Darüber hinaus sind die Zeichnungen plakativ vereinfacht und enthalten nicht jedes bei der praktischen Ausführung gegebenenfalls vorhandene Detail. Die Begriffe "innen" und "außen" beziehen sich auf die normale Gebrauchslage bzw. die Terminologie bei Kraftfahrzeugen.

In der Zeichnung sind Ausführungsbeispiele des Gegenstands in der Erfindung dargestellt.
- Fig. 1: zeigt ein Rad mit erfindungsgemäßen Gleitschutzvorrichtung, mit Blick auf die Radinnenflanke.
- Fig. 2: veranschaulicht das Rad nach Fig. 1 in einer Darstellung mit Blick auf die Radaußenseite.
- Fig. 3: zeigt in einer vergrößerten, schematisierten Darstellung einen Ausschnitt aus dem Laufgürtel.
- Fig. 4: veranschaulicht die Kontaktfläche zwischen dem Laufgürtel der erfindungsgemäßen Gleitschutzvorrichtung und der Fahrbahn unter Veranschaulichung der Streifen mit verstärkter Anbindung der quer verlaufenden Fäden.

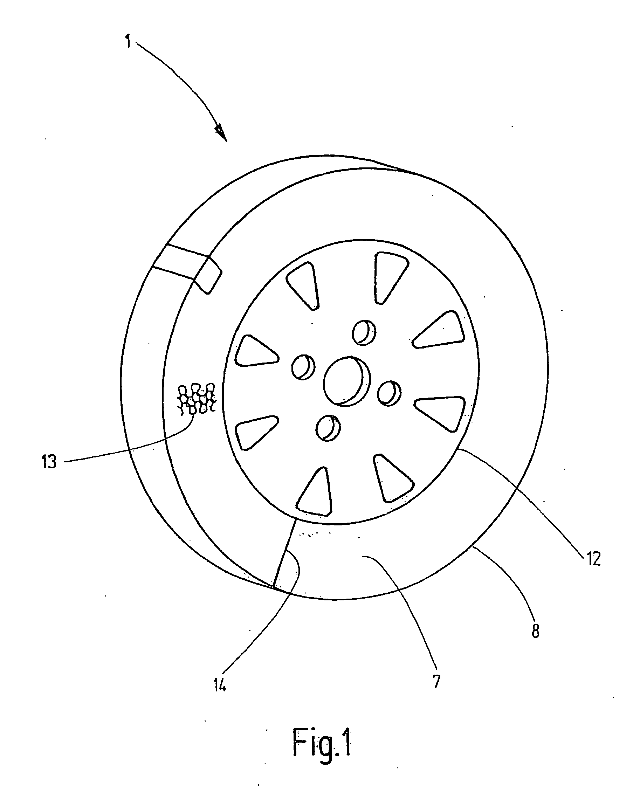

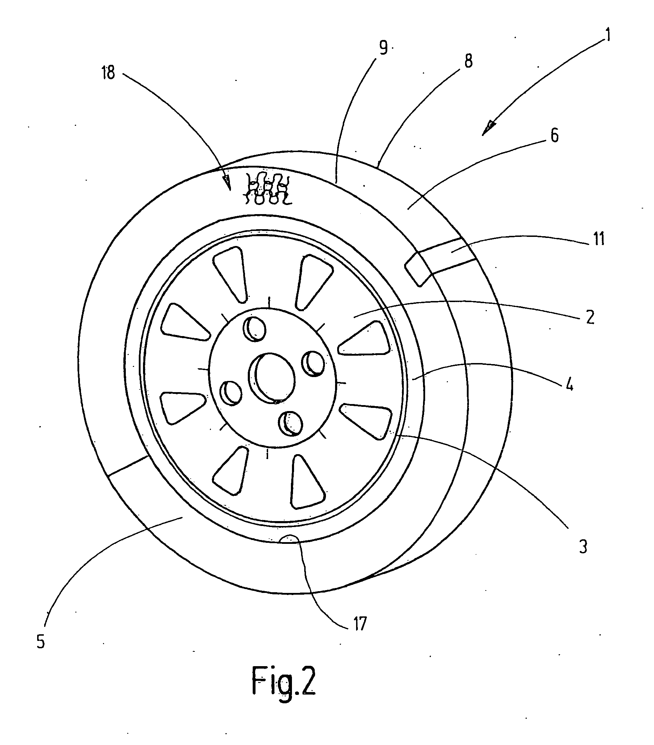

In den Figuren 1 und 2 ist ein Kraftfahrzeugrad mit einer aufgelegten Gleitschutzvorrichtung 1 dargestellt. Zu dem Kraftfahrzeugrad gehört, wie Figur 2 erkennen lässt, eine Felge 2, die radial außen an einem Felgenhorn 3 endet. Auf die Felge 2 ist ein Luftreifen 4 aufgezogen. Der Luftreifen 4 weist eine von der Gleitschutzvorrichtung 1 abgedeckte Lauffläche auf.

Die Gleitschutzvorrichtung 1 umfasst einen inneren Fixierring 5, einen Laufgürtel 6 sowie einen äußeren Fixierring 7. Der Laufgürtel 6 ist etwa so breit wie die Lauffläche des Reifens 4. Der Laufgürtel 6 endet an zwei in Umfangsrichtung parallel zueinander verlaufenden Kanten 8 und 9.

Die beiden Fixierringe 5 und 7 haben lediglich den Laufgürtel 6 daran zu hindern von der Lauffläche des Reifens herunter zu laufen. Sie brauchen keine Fliehkräfte aufzunehmen. Die Fliehkräfte werden im Laufgürtel 6 selbst ohne die Wirkung der Fixierringe 5 und 7 aufgenommen.

Der Laufgürtel 6 ist ein biegeschlaffes, textiles Flächengebilde, dass so gestaltet ist, dass es in Längsrichtung hinreichend undehnbar ist, damit es aufgrund der bei der Benutzung auftretenden Fliehkräfte nicht übermäßig gedehnt wird. Unter übermäßiger Dehnung ist hierbei eine Dehnung zu verstehen, die die Laufeigenschaften nennenswert beeinträchtigen würde.

Der Laufgürtel 6 ist an einer Stelle quer geteilt. An dieser Stelle befindet sich ein Flächenhaftverschluss 11, der ein Stück weit bis in die Fixierringe 5 und 7 hinein reicht. Der Zweck und der Aufbau eines solchen Flächenhaftverschlusses ist in der nicht vorveröffentlichten Patentanmeldung DE 10 2008 013 230.6 im einzelnen erläutert. Auf diese Patentanmeldung wird hier Bezug genommen.

Der äußere Fixierring 7 hat eine größere radiale Erstreckung als der innere Fixierring 5, da letzterer so gestaltet sein muss, dass er im Betrieb nicht mit auf der Radinnenseite vorhandenen Fahrzeugteilen, wie Spurstangenköpfen, Bremssätteln und dergleichen kollidieren kann. Er reicht deswegen vorzugsweise nicht bis zu dem Felgenhorn 3 heran.

Der äußere Fixierring 7 beginnt in radialer Richtung an der Kante 8 und reicht bis zu einer Innenkante 12. Der Fixierring 7 ist in sich dauerhaft geschlossen und er bildet somit in Umfangsrichtung gesehen ein endloses Gebilde. Er weist keinerlei Schlösser oder Verbindungselemente auf, die durch den Benutzer zu öffnen oder zu schließen wären.

Der Fixierring 7 besteht aus einem textilen Flächengebilde, in Gestalt eines bei 13 veranschaulichten Gestricks. Die Maschenreihen des Gestricks 13 verlaufen in radialer Richtung während die Maschenstäbchen in Umfangsrichtung liegen. Der Ring besteht aus einem Flachgestrick, das an einer schematisch angedeuteten Naht 14 zum Ringgebilde vernäht wird.

Der innen liegende Fixierring 5 beginnt an der radial außen liegenden Kante 9, an der er mit dem Laufgürtel 6 beispielsweise vernäht ist und endet an einer radial innen liegenden Kante 17, die sich bei der gezeigten Anordnung im Abstand zu dem Felgenhorn 3 befindet. Auch der innere Fixierring 5 besteht aus einem Gestrick, wie dies bei 18 angedeutet ist. Allerdings liegen hier die Maschenstäbchen in radialer Richtung, während die Maschenreihen in Umfangsrichtung ausgerichtet sind.

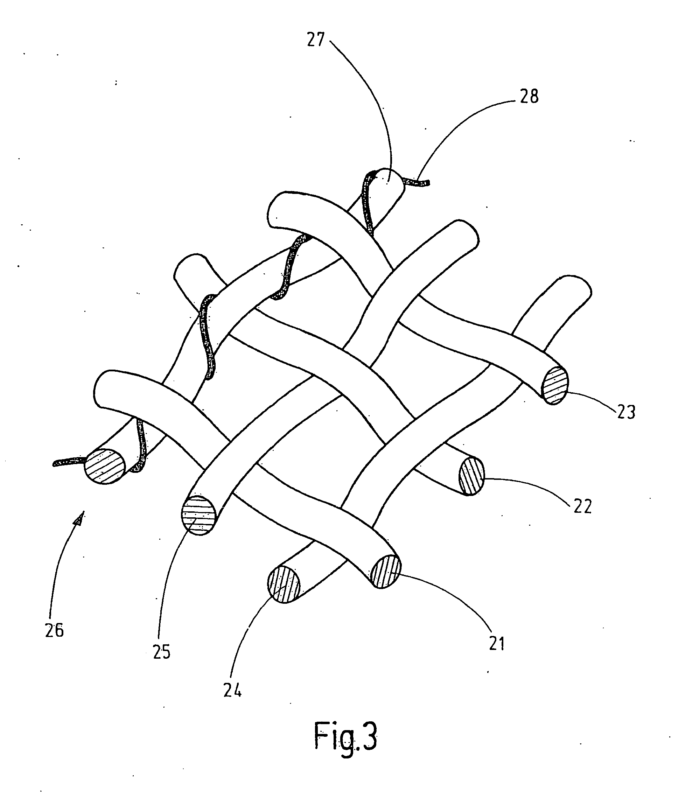

Figur 3 zeigt einen Ausschnitt aus dem Gewebe, das den Laufgürtel 6 bildet. Diese Darstellung ist stark vereinfacht und plakativ, denn sie soll nur das Wesentliche veranschaulichen. Wie zu erkennen ist, setzt sich das Gewebe aus Fäden 21, 22 und 23 sowie quer dazu verlaufenden Fäden 24, 25 und 26 zusammen. Die Fäden 21...23 sind beispielsweise Kettfäden und verlaufen in Längsrichtung des Laufgürtels 6. Die Fäden 24...26 sind dagegen Schussfäden und erstrecken sich quer zu dem Laufgürtel 6, d. h. parallel zur Drehachse des Rades 1. Das Gewebe ist dicht gewebt und keineswegs so offen wie dies die Fig. vermitteln mag.

Die Kettfäden 21...23 sind Multifilamentfäden. Sie bestehen beispielsweise aus Polyester.

Die Fäden 24 und 25 sind ebenfalls polymere Multifilamentgarne. Die Fäden 26 hingegen, sind Fäden aus sogenanntem Umwindegarn. Dieses setzt sich aus einer zylindrischen Seele oder Kern 27 und einem Umwindefaden 28 zusammen. Die Seele 27 ist ein polymeres Monofilament. Der Umwindefaden 28 hingegen ist ein Edelstahldraht. Der Durchmesser des E-delstahldrahtes liegt vorzugsweise zwischen 0,05 mm und 2 mm.

Die bisherige Theorie geht davon aus, dass die Traktion des solchermaßen aufgebauten Laufgürtels darauf beruht, dass bei mäßigen Temperaturen unter 0□C die durch den Umwindefaden 28 gebildeten Erhöhungen in die Eisoberfläche einsinken, um dort für einen gewissen Formschluss zu sorgen. Deswegen darf die Zahl der Kontaktpunkt, die durch den Umwindefaden 28 auf der Kontaktfläche mit der Fahrbahn gebildet werden, nicht zu groß werden, weil sonst der Druck an jeder Kontaktstelle zu stark sinken würde. Um die gewünschte niedrige (richtige) Anzahl von Kontaktpunkten zu erreichen, sind deswegen die quer verlaufenden Fäden 26 durch eine entsprechende Anzahl von Fäden 24, 25 in Längsrichtung des Laufgürtels 6 voneinander beabstandet.

Wie viele Fäden 24, 25 zwischen benachbarten Fäden 26 aus Umwindegarn eingefügt sind, richtet sich nach den Einsatzbedingungen, wie z.B. der Breite des Reifens, dem Gewicht des Fahrzeugs. Der jeweils günstigste Wert ist empirisch zu ermitteln.

Die Figur lässt außerdem erkennen, dass die Kettfäden 21...23, die den jeweiligen Faden 26 aus Umwindegarn kreuzen, auch dazu beitragen, dass die Anzahl der Kontaktpunkte zwischen dem Umwindefaden 28 und der Eisoberfläche sinkt. Der Grund liegt einfach daran, dass einzelne Filamente der Kettfäden 21...23 die Kontaktpunkte überdecken. Die Kontaktfläche wird vergrößert und der Druck an dieser Stelle sinkt.

Aus Festigkeitsgründen lässt sich allerdings die Anzahl der Kettfäden nicht beliebig reduzieren.

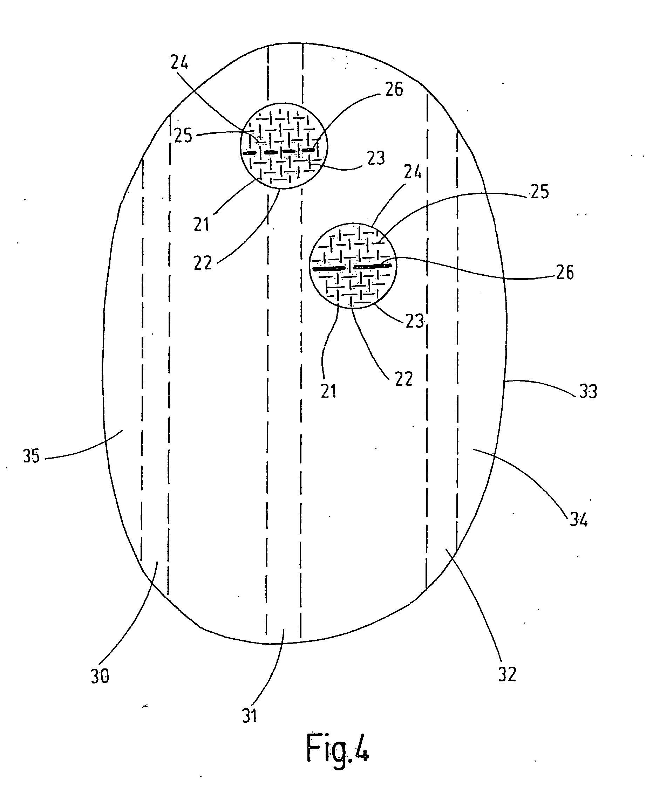

Um dennoch eine gute Verschleißfestigkeit zu erzielen, ohne die Traktion nennenswert zu beeinträchtigen, ist erfindungsgemäß eine Struktur vorgesehen, wie sie in Figur 4 prinzipiell veranschaulicht ist.

Figur 4 repräsentiert die Aufstandsfläche, der auf ein Rad aufgezogenen Gleitschutzvorrichtung 1 auf eine Fläche. In der ausschnittsweisen Vergrößerung innerhalb der Darstellung sind die Schussfäden, die aus Umwindegarn bestehen, mit dicken Strichen symbolisiert, während die Multifilamente die für die Schussfäden 24, 25 und die Kettfäden 21...23 verwendet werden, mit dünnen Linien symbolisiert sind.

Aufgrund ihrer mechanischen Eigenschaften sind die Umwindegarne verhältnismäßig steif, weshalb sie durch die Kettfäden nicht zu stark in schlangenlinienförmige Verlauf gezwungen werden wie die Multifilamente, die für die Schussfäden 24, 25 verwendet werden. Die Schussfäden, die von Umwindegarnen gebildet sind, werden deswegen eher an das Gewebe angebunden als in das Gewebe eingebunden.

Um die gewünschte Verschleißfestigkeit bei gleich guter Traktion zu bekommen, sind wie Figur 4 zeigt, drei in Längsrichtung des Laufgürtels 6 sich erstreckende streifenförmige Bereiche 30, 31 und 32 zu erkennen. Der Streifen 30 liegt neben der einen Seitenkante und dort in einem gewissen Abstand zum Rand der Aufstandsfläche, die durch eine Linie 33 versinnbildlicht ist. Der Streifen 32 hat ebenfalls einen gewissen Abstand zum Rand der Aufstandsfläche. Hierdurch entstehen zwei segmentförmige Bereiche 34 und 35, in jenen Bereichen, in denen am Reifen die größte Aufstandskraft erzeugt wird.

Ein weiterer Streifen 31 befindet sich mittig zwischen den seitlichen Streifen 30 und 32.

Die Streifen 30, 31 und 32 weichen in ihrer Bindungsart von der Art der Gewebebindung in den Bereichen außerhalb der Streifen 30, 31 und 32 ab. In den Bereichen der Streifen 30 und 32 sind die Schussfäden 26 aus Umwindegarn fester mit Hilfe der Kettfäden 21, 23 angebunden als in den Bereichen außerhalb dieser Streifen 30, 31, 32. Wie die Ausschnittvergrößerung aus dem Streifen 31 zeigt, ist der Schussfaden 26 im Bereich des Streifens von mehr Kettfäden 21...23 gekreuzt. In dem Bereich außerhalb der Streifen 30...32 ist wie die dort gezeigte Vergrößerung erkennen lässt, der Schussfaden 26 deutlich weniger angebunden, d. h. er wird von deutlich weniger Kettfäden 21...23 gekreuzt. Dadurch wird erreicht, dass die die Traktion erzeugenden Schussfäden aus Umwindegarn über eine verhältnismäßig lange Strecke auf der Außenseite des Laufgürtels 6 verläufen und nicht durch Kettfäden "verdeckt" ist. Dort wo der Schussfaden 26 aus Umwindegarn auf der Außenseite des Laufgürtels flott liegt, kann der Umwindefaden 28 wie oben beschrieben wirken. Im Bereich der starken Einbindung, wie sie in den Streifen 30, 31 und 32 erfolgt, wird hingegen durch die Kettfäden 21...23 der Kontakt der Umwindefäden 28 mit der Eisoberfläche eingeschränkt. Dies ergibt sich aus den größeren Verhältnissen wie sie in Figur 3 veranschaulicht sind.

Folgende empirisch ermittelte Werte haben sich als zweckmäßig bei einem bestimmten Fahrzeuggewicht einer bestimmten Reifenbreite herausgestellt:

| | | |
|---|---|---|
| Kettfadendichte in den Bereichen 30, 31 und 32: | | 24 Fäden/cm im Doppelgewebe |
| Kettfadendichte außerhalb der Bereiche 30, 31 und 32: | | 24 Fäden/cm im Doppelgewebe |
| Abstand zwischen benachbarten Kettfäden, die innerhalb der Bereiche 30, 31 und 32 auf der Außenseite des Laufgürtels den Schussfaden aus Kettfadendichte in den Bereichen 30, 31 und 32: | | 1 mm 24 Fäden/cm im Doppelgewebe |
| Umwindegarn kreuzen: | | |
| Abstand zwischen benachbarten Kettfäden, die außerhalb der Bereiche 30, 31 und 32 auf der Außenseite des Laufgürtels den Schussfaden aus Umwindegarn kreuzen: | | 2 mm |

Wie die Tabelle zeigt ist die Kettfadendichte innerhalb und außerhalb der Streifen 30, 31, 32 gleich. Was unterschiedlich ist ist der Umstand, dass die Kettfäden außerhalb der Streifen 30, 31, 32 über mehr Schussfäden auf deren von der Straße abliegenden Seite führt.

Durch diese unterschiedliche starke Anbindung der Schussfäden aus Umwindegarn wird bei guter Traktion sichergestellt, dass einzelne durchgescheuerte Kettfäden nicht dazu führen, dass der Schussfaden aus Umwindegarn aufgrund der Fliehkräfte und der Kräfte zwischen Gleitschutzvorrichtung und Straße verloren gehen. Sie bleiben an dem Laufgürtel fixiert und können, auch wenn sie gerissen sind, weiterhin ihre Funktion erfüllen.

Eine weitere Verbesserung lässt sich erreichen, wenn das Gewebe nicht wie in Figur 3 gezeigt, als einlagiges Gewebe sondern als sogenanntes doppellagiges Gewebe ausgeführt ist. Der Begriff doppellagiges Gewebe ist in der Textiltechnik bekannt und es ist auch bekannt, wie ein doppellagiges Gewebe ausgeführt ist. Es genügt deswegen hier eine kursorische Darstellung.

Bei einem doppellagigem Gewebe werden in vorgegebenen Abständen die Kettfäden der einen Lage so geführt, dass sie in der anderen Lage abbinden. Dadurch umschlingend die Kettfäden der beiden Gewebelagen abwechselnd auch die Schussfäden der jeweiligen anderen Lage. Die beiden Lagen werden somit wechselweise über die Kettfäden, die aus der eigenen Lage heraus gezogen sind und um Schussfäden der anderen Lage laufen miteinander verbunden.

Wenn in einem solchen doppellagigen Gewebe durch Abnutzung ein Loch entsteht, werden durch die Anbindung der Lochränder an die darunter befindliche Lage diese Ränder fixiert und das Gewebe kann nicht weiter an den Lochrändern aufreißen. Oder anders ausgedrückt, die zweite Lage, also diejenige Lage, die sich zwischen der äußeren Lage und dem Reifen befindet, bildet im Falle eines Lochs eine Art aufgenähten Flicken.

Eine Gleitschutzvorrichtung für Kraftfahrzeugräder weist einen Laufgürtel auf, der durch seitliche Fixierringe am Fahrzeugrad fixiert ist. Der Laufgürtel besteht aus einem Gewebe, das Schussfäden aus Umwindegarn enthält. Um bei guter Traktionsfähigkeit die Standzeit zu erhöhen, sind die Schussfäden aus Umwindegarn in einigen Bereichen stärker angebunden als in anderen Bereichen.

## Patentansprüche

1. Gleitschutzvorrichtung (1) für Kraftfahrzeugräder, die eine Radinnenseite eine Radaußenseite und eine Lauffläche aufweisen,
mit einem ersten Fixiermittel (5), das bei montierter Gleitschutzvorrichtung (1) an der Radinnenseite angeordnet ist,
mit einem zweiten Fixiermittel (7), das bei montierter Gleitschutzvorrichtung (1) an der Radaußenseite angeordnet ist,
mit einem Laufgürtel (6), der bei montierter Gleitschutzvorrichtung (1) auf der Lauffläche liegt, der eine Kontaktfläche zur Straße bildet und zwei seitliche Längskanten (8,9) aufweist, von denen die eine mit dem ersten Fixiermittel (7) und die andere Kante mit dem zweiten Fixiermittel (5) verbunden ist,
wobei der Laufgürtel (6) ein Gewebe aus sich kreuzenden Fäden (21..26) aufweist
wobei einige der Fäden (26) aus Umwindegarn bestehen, **dadurch gekennzeichnet, dass**
die Gewebebindung wenigstens zwei voneinander unterscheidbaren Streifen (30..32) aufweist, die in Umfangsrichtung des Rads verlaufen.

2. Gleitschutzvorrichtung nach Anspruch 1, **dadurch gekennzeichnet, dass** innerhalb der Streifen (30..32) die Fäden (26) aus Umwindegarn stärker angebunden sind als außerhalb der Streifen.

3. Gleitschutzvorrichtung nach Anspruch 1, **dadurch gekennzeichnet, dass** die parallel zu der Achse des Rades liegenden Fäden (26) jeweils von Umwindegarn gebildet sind.

4. Gleitschutzvorrichtung nach Anspruch 1, **dadurch gekennzeichnet, dass** der/die Umwindefaden/-fäden (28) des Umwindegarns (26), die die Seele (27) des Garns (26) umgeben aus Metalldraht, vorzugsweise aus Edelstahl, sind.

5. Gleitschutzvorrichtung nach Anspruch 1, **dadurch gekennzeichnet, dass** die Seele (27) des Umwindegarns (26) einen Durchmesser zwischen 0,2 mm und 1 mm aufweist.

6. Gleitschutzvorrichtung nach Anspruch 1, **dadurch gekennzeichnet, dass** der Abstand zwischen zwei benachbarten Windungen des Umwindefadens (28) zwischen 0,3 mm und 4 mm liegt.

7. Gleitschutzvorrichtung nach Anspruch 1, **dadurch gekennzeichnet, dass** der Abstand zwischen zwei benachbarten Fäden (28) aus Umwindegarn, gemessen in Umfangsrichtung des Laufgürtels (6) zwischen 0,3 mm und 10 mm beträgt.

8. Gleitschutzvorrichtung nach Anspruch 1, **dadurch gekennzeichnet, dass** die in Umfangsrichtung verlaufenden Fäden (21..23) einen Durchmesser von 0,1 mm und 1 mm aufweisen.

9. Gleitschutzvorrichtung nach Anspruch 1, **dadurch gekennzeichnet, dass** die Breite eines Streifens (30..32), in der die quer verlaufenden Fäden (26) stärker eingebunden sind zwischen 3 mm und 40 mm liegt.

10. Gleitschutzvorrichtung nach Anspruch 1, **dadurch gekennzeichnet, dass** die Streifen (30..32) in dem Laufgürtel (6) derart angeordnet sind, dass bei auf der Fahrbahn aufstehendem Rad beidseits der außen liegenden Streifen (30,32) mit stärkerer Anbindung der quer verlaufenden Fäden (26) Bereiche (34,35) verbleiben, in denen die quer verlaufenden Fäden (26) weniger stark angebunden sind.

11. Gleitschutzvorrichtung nach Anspruch 1, **dadurch gekennzeichnet, dass** in den Streifen (30..32), in denen die quer verlaufenden Fäden (26) stärker angebunden sind, die Anzahl der anbindenden in Längsrichtung des Laufgürtels (6) verlaufenden Fäden (21..23) zwischen 0,3 und 3 pro Millimeter Längserstreckung des quer verlaufenden Fadens (26) liegt.

12. Gleitschutzvorrichtung nach Anspruch 1, **dadurch gekennzeichnet, dass** die anbindenden Fäden (21..23) polymere Multifilamentfäden sind.

13. Gleitschutzvorrichtung nach Anspruch 1, **dadurch gekennzeichnet, dass** der Laufgürtel (6) und die Fixierringe (5,7) biegeschlaff sind.

14. Gleitschutzvorrichtung nach Anspruch 1, **dadurch gekennzeichnet, dass** der Laufgürtel (6) einen Flächenhaftverschluss (11) aufweist, an dem sich die Enden des Laufgürtels (6) überlappen.

15. Gleitschutzvorrichtung nach Anspruch 1, **dadurch gekennzeichnet, dass** der Laufgürtel (6) von einem Doppelgewebe gebildet ist.

## Claims

1. Antiskid device (1) for motor vehicle wheels that have a wheel inside surface, a wheel outside surface and a running surface,
with a first fastening element (5), which is arranged on the wheel inside surface when the antiskid device (1) is mounted,
with a second fastening element (7), which is arranged on the wheel outside surface when the antiskid device (1) is mounted,
with a running belt (6), which when the antiskid device (1) is mounted lies on the running surface, which forms a contact surface to the road and has two lateral longitudinal edges (8, 9), of which one is connected to the first fastening element (7) and the other edge is connected to the second fastening element (5),
wherein the running belt (6) has a woven fabric composed of intersecting threads (21 .. 26),
wherein some of the threads (26) are composed of covering yam,
**characterised in that** the weave has at least two different strips (30 .. 32) that run in the peripheral direction of the wheel.

2. Antiskid device according to claim 1, **characterised in that** the threads (26) of covering yarn are tied more firmly inside the strips (30 .. 32) than outside the strips.

3. Antiskid device according to claim 1, **characterised in that** the threads (26) lying parallel to the axis of the wheel are respectively formed from covering yarn.

4. Antiskid device according to claim 1, **characterised in that** the covering thread/threads (28) of the covering yarn (26), which surround the core (27) of the yarn (26), are composed of metal wire, preferably of special steel.

5. Antiskid device according to claim 1, **characterised in that** the core (27) of the covering yarn (26) has a diameter of between 0.2 mm and 1 mm.

6. Antiskid device according to claim 1, **characterised in that** the spacing between two adjacent windings of the covering thread (28) amounts to between 0.3 mm and 4 mm.

7. Antiskid device according to claim 1, **characterised in that** the spacing between two adjacent threads (28) of covering yarn, measured in the peripheral direction of the running belt (6), amounts to between 0.3 mm and 10 mm.

8. Antiskid device according to claim 1, **characterised in that** the threads (21 .. 23) running in the peripheral direction have a diameter of 0.1 mm and 1 mm.

9. Antiskid device according to claim 1, **characterised in that** the width of a strip (30 .. 32), in which the transversely running threads (26) are tied in more firmly, amounts to between 3 mm and 40 mm.

10. Antiskid device according to claim 1, **characterised in that** the strips (30 .. 32) are arranged in the running belt (6) in such a manner that when the wheel stands on the road surface there are regions (34, 35) left on either side of the outer strips (30, 32) with the firmer tying of the transversely running threads (26), in which regions the transversely running threads (26) arc tied less firmly.

11. Antiskid device according to claim 1, **characterised in that** in the strips (30 .. 32), in which the transversely running threads (26) are tied more firmly, the number of tying threads (21 .. 23) running in the longitudinal direction of the running belt (6) amounts to between 0.3 and 3 per millimetre of the longitudinal extent of the transversely running thread (26).

12. Antiskid device according to claim 1, **characterised in that** the tying threads (21 .. 23) are polymer multifilament threads.

13. Antiskid device according to claim 1, **characterised in that** the running belt (6) and the fastening rings (5, 7) are pliant.

14. Antiskid device according to claim 1. **characterised in that** the running belt (6) has a surface adhesive fastener (11), at which the ends of the running belt (6) overlap.

15. Atttiskid device according to claim 1, **characterised in that** the running belt (6) is formed from a double weave fabric.

## Revendications

1. Dispositif antidérapant (1) pour roues de véhicules automobiles qui présentent une face de roue intérieure, une face de roue extérieure et une bande de roulement,
comprenant un premier moyen de fixation (5) qui, lorsque le dispositif antidérapant (1) est monté, est placé sur la face de roue intérieure,
comprenant un deuxième moyen de fixation (7) qui, lorsque le dispositif antidérapant (1) est monté, est placé sur la face de roue extérieure,
comprenant une ceinture de roulement (6) qui, lorsque le dispositif antidérapant (1) est monté, est appliquée contre la bande de roulement et forme une surface de contact avec la chaussée et présente deux bords longitudinaux (8, 9) latéraux dont un est relié au premier moyen de fixation (5) et l'autre bord est relié au deuxième moyen de fixation (7),
la ceinture de roulement (6) présentant un tissu constitué de fils (21..26) qui se croisent,
sachant que quelques-uns des fils (26) sont constitués de filé entouré,
**caractérisé en ce que**
l'armure du tissu présente au moins deux bandes (30..32) qui peuvent être distinguées l'une de l'autre et s'étendent dans la direction circonférentielle de la roue.

2. Dispositif antidérapant selon la revendication 1, **caractérisé en ce qu'**à l'intérieur des bandes (30., 32), les fils (26) en filé entouré sont liés plus fortement qu'à l'extérieur des bandes

3. Dispositif antidérapant selon la revendication 1, **caractérisé en ce que** les fils (26) qui sont parallèles à l'axe de la roue sont constitués respectivement de filé entouré.

4. Dispositif antidérapant selon la revendication 1, **caractérisé en ce que** le/les fil(s) enroulé(s) (28) du filé entouré (26) qui entourent l'âme (27) du filé (26) sont constitués de fil métallique, de préférence en acier inoxydable.

5. Dispositif antidérapant selon la revendication 1, **caractérisé en ce que** l'âme (27) du filé entouré (26) présente un diamètre compris entre 0,2 mm et 1 mm.

6. Dispositif antidérapant selon la revendication 1, **caractérisé en ce que** la distance entre deux spires voisines du filé enroulé (28) est comprise entre 0,3 mm et 4 mm.

7. Dispositif antidérapant selon la revendication 1, **caractérisé en ce que** la distance entre deux fils (28) voisins en filé enroulé, mesurée dans la direction circonférentielle de la ceinture de roulement (6), est comprise entre 0,3 mm et 10 mm.

8. Dispositif antidérapant selon la revendication 1, **caractérisé en ce que** les fils (21..23) s'étendant dans la direction circonférentielle présentent un diamètre compris entre 0,1 mm et 1 mm.

9. Dispositif antidérapant selon la revendication 1, **caractérisé en ce que** la largeur d'une bande (30..32), dans laquelle les fils (26) transversaux sont plus fortement liés, est comprise entre 3 mm et 40 mm.

10. Dispositif antidérapant selon la revendication 1, **caractérisé en ce que** les bandes (30..32) sont disposées dans la ceinture de roulement (6) de manière telle que, lorsque la roue est en appui sur la chaussée, il subsiste, de part et d'autre des bandes (30..32) à liaison plus forte des fils (26) transversaux situées à l'extérieur, des zones dans lesquelles les fils (26) transversaux sont moins fortement liés.

11. Dispositif antidérapant selon la revendication 1, **caractérisé en ce que** dans les bandes (30..32), dans lesquelles les fils (26) transversaux sont plus fortement liés, le nombre des fils (21..23) qui s'étendent dans la direction longitudinale de la ceinture de roulement (6) et établissent la liaison est compris entre 0,3 et 3 par millimètre de longueur du fil (26) transversal.

12. Dispositif antidérapant selon la revendication 1, **caractérisé en ce que** les fils (21..23) de liaison sont des fils multifilamsnts polymères.

13. Dispositif antidérapant selon la revendication 1, **caractérisé en ce que** la ceinture de roulement (6) et les bagues de fixation (5, 7) sont souples en flexion.

14. Dispositif antidérapant selon la revendication 1, **caractérisé en ce que** la ceinture de roulement (6) présente un moyen de fermeture par adhérence de surface (11), où les extrémités de la ceinture de roulement (6) se chevauchent.

15. Dispositif antidérapant selon la revendication 1, **caractérisé en ce que** la ceinture de roulement (6) est constituée d'un double tissu.
